# EUROPEAN PATENT APPLICATION

(11) **EP 4 737 289 A1**
(43) Date of publication of application: **06.05.2026**
(21) Application number: 24934918.4
(22) Date of filing: 20.12.2024
(51) Int. Cl.: B62K 25/24

(54) **VEHICLE**

(30) Priority: 08.04.2024 CN 202410418399; 08.04.2024 CN 202420716242 U
(71) Applicant: Ninebot (Changzhou) Tech Co., Ltd., Zhejiang 311100 (CN)
(72) Inventor: HU, Yujing, Hangzhou, Zhejiang 311100 (CN); DING, Zhilei, Hangzhou, Zhejiang 311100 (CN); QI, Mingyang, Hangzhou, Zhejiang 311100 (CN); SHI, Anxin, Hangzhou, Zhejiang 311100 (CN)
(74) Representative: Pfenning, Meinig & Partner mbB
(86) International application number: PCT/CN2024/141243
(87) International publication number: WO 2025/213855

(57) **Abstract**

The present application provides a vehicle, and belongs to a field of cycling transportation technologies. The vehicle includes a wheel body, a front fork structure, and two shock absorption apparatuses. The front fork structure is erected on the wheel body. The two shock absorption apparatuses are respectively located on two sides of the front fork structure, one end of each shock absorption apparatus is connected to the front fork structure, and the other end of each shock absorption apparatus is connected to the wheel body. In this way, the present application can achieve shock absorption by setting an elastic component, so that the vehicle does not produce noise when in operation. The inherent characteristics of the elastic component make a shock absorption apparatus more linear during operation, and the shock absorption and rebound are also softer, providing a good experience. In addition, the shock absorption apparatus is connected to the front fork structure, which provides the vehicle with a larger trail distance and improves riding stability.

## Description

This application claims priority to Chinese Patent Application No. 202410418399.9, filed with the China National Intellectual Property Administration on April 08, 2024 and entitled "VEHICLE", which is hereby incorporated by reference in its entirety.

This application claims priority to Chinese Patent Application No. 202420716242.X, filed with the China National Intellectual Property Administration on April 08, 2024 and entitled "FRONT FORK STRUCTURE WITH SHOCK ABSORPTION CHARACTERISTICS AND VEHICLE", which is hereby incorporated by reference in its entirety.

### TECHNICAL FIELD

The present application relates to a field of cycling transportation technologies and, in particular, to a vehicle.

### BACKGROUND

In recent years, with the continuous development of technology and the continuous improvement of people's living standards, the development of China's vehicle industry has been relatively rapid, and the future development trend of the vehicle industry remains the core industry for development. The functionality of vehicles is becoming increasingly high, and people's means of transportation are also becoming more diverse. Where a scooter, as a cycling tool, is highly favored by consumers due to its advantages such as fast folding speed, small size, easy portability and the ability to navigate through relatively crowded roads.

Generally speaking, the scooter can include structures such as a frame, a front wheel, and a front fork, and the frame connected to the front wheel through the front fork. The scooter is prone to jolting when passing through uneven roads, which can affect safe driving and comfort.

However, most of scooters at present do not have shock absorption structures, resulting in a poor riding experience when riding a scooter on bumpy roads. In addition, some models with shock absorption structure mainly use springs to achieve shock absorption, which generally have two obvious problems: firstly, the spring shock absorption is usually set on two sides of the front fork, making the overall aesthetics of the scooter insufficient; secondly, when the spring shock absorption passes through bumpy roads, the characteristics of the spring itself cause significant abnormal noise in the scooter, affecting the riding experience.

### SUMMARY

The present application provides a vehicle that achieves shock absorption by setting an elastic component, so that the vehicle does not produce noise when in operation. The inherent characteristics of the elastic component make a shock absorption apparatus more linear during operation, and the shock absorption and rebound are also softer, providing a good experience. In addition, the shock absorption apparatus is connected to a front fork structure, which provides the vehicle with a larger trail distance and improves riding stability.

To achieve the above-mentioned purposes the present application provides the following technical solutions.

The present application provides a vehicle, including:
a wheel body;
a front fork structure, where the front fork structure is erected on the wheel body;
two shock absorption apparatuses, where the two shock absorption apparatuses are respectively located on two sides of the front fork structure, one end of each shock absorption apparatus is connected to the front fork structure, and the other end of each shock absorption apparatus is connected to the wheel body.

On the basis of the above technical solution, the present application can also make the following improvements.

In a possible implementation, each shock absorption apparatus includes a shock absorption housing, an elastic component, and a torsion shaft;
the shock absorption housing is sleeved on the elastic component;
one end of the torsion shaft is inserted into the elastic component, and the other end of the torsion shaft is connected to the front fork structure.

In a possible implementation, the elastic component is made of rubber material, and the elastic component is used to reduce vibration of the wheel body.

In a possible implementation, each shock absorption apparatus further includes: a first fixing component;
the first fixing component is sleeved on the elastic component, the first fixing component, the elastic component, and the torsion shaft are inserted as a whole into the shock absorption housing;
the first fixing component and the elastic component are arranged flush with a side of the shock absorption housing facing the front fork structure after being inserted into the shock absorption housing.

In a possible implementation, one end of each shock absorption housing is provided with a first groove;
one end of the shock absorption apparatus is connected to the wheel body through the first groove, and the other end of the shock absorption apparatus is connected to the front fork structure through the torsion shaft.

In a possible implementation, the vehicle further includes: a wheel axle, where the wheel axle is protruding from two sides of the wheel body;
the wheel axle is threaded through the first groove to connect the shock absorption housing with the wheel body;
the wheel axle is matched with the first groove to prevent relative rotation between the wheel axle and the shock absorption housing.

In a possible implementation, the front fork structure includes a main body portion and a bending portion, where the main body portion is connected to the bending portion;
the bending portion has an opening, and a direction of the opening is set towards the wheel body, so that the bending portion is erected on the wheel body;
the bending portion is a flat U-shaped structure, and the bending portion has a double-layer structure.

In a possible implementation, the front fork structure further includes: a second fixing component;
the second fixing component is located between the main body portion and the bending portion;
one end of the second fixing component is sleeved on the main body portion, and the other end of the second fixing component is connected to the bending portion.

In a possible implementation, the front fork structure further includes: two front fork falculae;
the two front fork falculae are respectively located at two ends of the bending portion, and each front fork falcula is connected to the bending portion.

In a possible implementation, each front fork falcula is provided with a second groove, and each second groove corresponds to the torsion shaft in each shock absorption apparatus;
the torsion shaft is threaded through the second groove to connect the shock absorption apparatus with the front fork structure;
the torsion shaft is matched with the second groove to prevent relative rotation between the torsion shaft and the front fork structure.

In a possible implementation, the bending portion is arranged at an incline relative to a travelling direction of the vehicle, and an end of the bending portion and the main body portion is located behind an end of the bending portion connected to the shock absorption apparatus.

In a possible implementation, the bending portion includes a first bending portion and a second bending portion; and the first bending portion is connected to the main body portion;
the second bending portion is connected to the first bending portion, and an end of the second bending portion that departs from the first bending portion extends in a direction away from the wheel axle of the wheel body.

In a possible implementation, the second bending portion is provided with a fixing hole, and the torsion shaft is threaded through the fixing hole.

In a possible implementation, the bending portion includes a flat portion, and a thickness of the flat portion is smaller than a thickness of remaining portions of the second bending portion;
the fixing hole is set in the flat portion.

In a possible implementation, the vehicle further includes: a connector, where one end of the connector is sleeved on the torsion shaft, and the other end of the connector is sleeved on the wheel axle.

In a possible implementation, the shock absorption housing is further provided with a connection protrusion, and the connection protrusion is rotatably connected to the connector through a connection shaft.

In a possible implementation, the vehicle further includes an annular guiding component, and the annular guiding component is connected to the connector and sleeved on the connection protrusion;
where the annular guiding component is provided with a guiding groove, the shock absorption housing further includes a guiding protrusion, and the guiding protrusion is sliding on the guiding groove.

In a possible implementation, the vehicle further includes a wiring harness fixing component; and the wiring harness fixing component is set on the front fork structure.

In a possible implementation, the wiring harness fixing component surrounds at least part of an outer peripheral surface of the bending portion;
the wiring harness fixing component is provided with a U-shaped fixing groove.

The present application provides a vehicle, and the vehicle includes a wheel body, a front fork structure, and two shock absorption apparatuses. The front fork structure is erected on the wheel body. The two shock absorption apparatuses are respectively located on two sides of the front fork structure, one end of each shock absorption apparatus is connected to the front fork structure, and the other end of each shock absorption apparatus is connected to the wheel body. In this way, the present application can achieve shock absorption by setting an elastic component, so that the vehicle does not produce noise when in operation. The inherent characteristics of the elastic component make a shock absorption apparatus more linear during operation, and the shock absorption and rebound are also softer, providing a good experience. In addition, the shock absorption apparatus is connected to the front fork structure, which provides the vehicle with a larger trail distance and improves riding stability.

### BRIEF DESCRIPTION OF DRAWINGS

In order to more clearly illustrate the technical solutions in embodiments of the present application or the prior art, a brief introduction will be given to the accompanying drawings required in the embodiments or existing technology description. It is obvious that the accompanying drawings in the following description are some embodiments of the present application. For those skilled in the art, other accompanying drawings can also be obtained based on these accompanying drawings without creative labor.
FIG. 1 is a side view of a partial structure of a vehicle provided in an embodiment of the present application.
FIG. 2 is an explosion diagram of a shock absorption apparatus provided in an embodiment of the present application.
FIG. 3 is a schematic structural diagram of a shock absorption apparatus provided in an embodiment of the present application.
FIG. 4 is a front view of a partial structure of a vehicle provided in an embodiment of the present application.
FIG. 5 is a front view of a front fork structure provided in an embodiment of the present application.
FIG. 6 is a side view of a front fork structure provided in an embodiment of the present application.
FIG. 7 is a perspective view of a partial structure of a vehicle provided in another embodiment of the present application.
FIG. 8 is a side view of a partial structure of a vehicle provided in another embodiment of the present application.
FIG. 9 is a schematic explosion diagram of a partial structure of a vehicle provided in another embodiment of the present application.
FIG. 10 is a perspective view of a front fork structure provided in another embodiment of the present application.
FIG. 11 is a side view of a front fork structure provided in another embodiment of the present application.
FIG. 12 is a schematic diagram of a shock absorption apparatus provided in another embodiment of the present application.

Description of reference numbers: 100-vehicle; 200-wheel body; 210-wheel axle; 300-front fork structure; 310-main body portion; 320-bending portion; 321-opening; 322- first bending portion; 323-second bending portion; 324-fixed hole; 325-flat portion; 330-second fixing component; 331-third cavity; 340 front fork falcula; 341-second groove; 400-shock absorption apparatus; 410-shock absorption housing; 411-first cavity; 412-extension portion; 413-first groove; 414-connection protrusion; 415-guiding protrusion; 420-elastic component; 430-torsion shaft; 440-first fixing component; 441-second cavity; 500-connector; 600-annular guiding component; 610-guiding groove; 700-wiring harness fixing component; 710-fixing groove.

### DESCRIPTION OF EMBODIMENTS

As descripted in BACKGROUND, most of scooters at present do not have shock absorption structures, resulting in a poor riding experience when riding a scooter on bumpy roads. In addition, some models with shock absorption structure mainly use springs to achieve shock absorption, which generally have two obvious problems: firstly, the spring shock absorption is usually set on two sides of the front fork, making the overall aesthetics of the scooter insufficient; secondly, when the spring shock absorption passes through bumpy roads, the characteristics of the spring itself cause significant abnormal noise in the scooter, affecting the riding experience.

Regarding the above technical problems, the present application provides a vehicle, including a wheel body, a front fork structure, and two shock absorption apparatuses. The front fork structure is erected on the wheel body. The two shock absorption apparatuses are respectively located on two sides of the front fork structure, one end of each shock absorption apparatus is connected to the front fork structure, and the other end of each shock absorption apparatus is connected to the wheel body. In this way, the present application can achieve shock absorption by setting an elastic component, so that the vehicle does not produce noise when in operation. The inherent characteristics of the elastic component make a shock absorption apparatus more linear during operation, and the shock absorption and rebound are also softer, providing a good experience. In addition, the shock absorption apparatus is connected to the front fork structure, which provides the vehicle with a larger trail distance and improves riding stability.

In order to make the above objectives, features, and advantages of the embodiments of the present application more obvious and understandable, the technical solutions in the embodiments of the present application will be clearly and completely described below in conjunction with the accompanying drawings. Obviously, the described embodiments are only a part of the embodiments of the present application, not all embodiments. Based on the embodiments in the present application, all other embodiments obtained by those of ordinary skilled in the art without creative labor are within the protection scope of the present application.

An embodiment of the present application provides a vehicle that achieves shock absorption by setting an elastic component, so that the vehicle does not produce noise when in operation. The inherent characteristics of the elastic component make a shock absorption apparatus more linear during operation, and the shock absorption and rebound are also softer, providing a good experience. In addition, the shock absorption apparatus is connected to a front fork structure, which provides the vehicle with a larger trail distance and improves riding stability. The specific structure of the vehicle provided by an embodiment of the present application is described below in conjunction with the accompanying drawings.

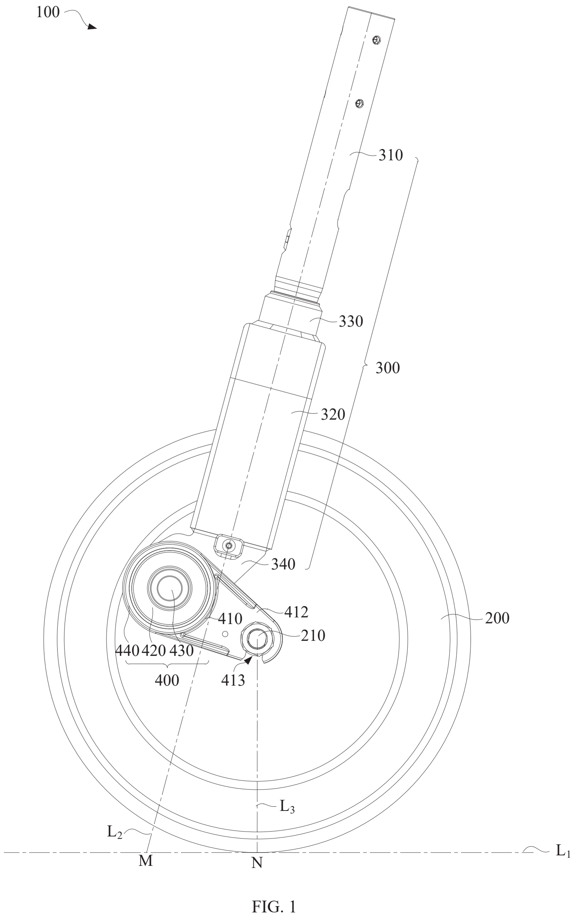

Referring to FIG. 1, an embodiment of the present application provides a vehicle 100. In an embodiment of the present application, the vehicle 100 may be a transportation vehicle such as a scooter, a bicycle, an electric vehicle, etc. The vehicle 100 includes a wheel body 200, a front fork structure 300, and a shock absorption apparatus 400. In a possible implementation, the number of the shock absorption apparatus 400 can be at least two, and the present application does not limit the number of the shock absorption apparatus 400. In an embodiment of the present application, the number of the shock absorption apparatus 400 is exemplarily taken as two. In a possible implementation, the front fork structure 300 is erected on the wheel body 200. Additionally, the two shock absorption apparatuses 400 are respectively located on two sides of the front fork structure 300, one end of each shock absorption apparatus 400 is connected to the front fork structure 300, and the other end of each shock absorption apparatus 400 is connected to the wheel body 200. In this way, the wheel body 200 does not directly contact with the front fork structure 300. When the wheel body 200 is impacted, the shock absorption apparatus 400 can absorb the impact force received by the wheel body 200, thereby achieving a shock absorption effect.

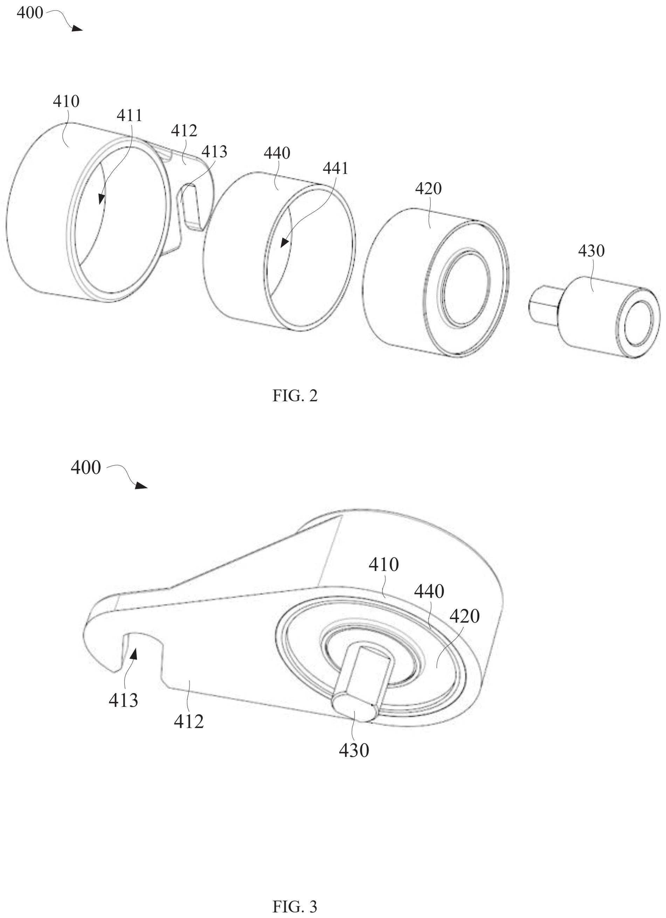

Referring to FIG. 2, on the basic of the above embodiment, each shock absorption apparatus 400 may further include a shock absorption housing 410, an elastic component 420, and a torsion shaft 430. In a possible implementation, the shape of the elastic component 420 can be a cylindrical structure, and the present application does not limit the shape of the elastic component 420. In an embodiment of the present application, there may be a hollow first cavity 411 in the shape of a cylinder inside the shock absorption housing 410, so that the elastic component 420 can be inserted into the first cavity 411 of the shock absorption housing 410. In a possible implementation, the shock absorption housing 410 can be sleeved on the elastic component 420, and due to the torsional characteristics of the elastic component 420, it can be used to reduce the vibration of the wheel body 200. Additionally, one end of the torsion shaft 430 can be inserted into the elastic component 420, while the other end of the torsion shaft 430 is connected to the front fork structure 300. In a possible implementation, one end of the torsion shaft 430 facing the elastic component 420 can be provided with a stepped structure, so that the torsion shaft 430 can be connected to the elastic component 420 through the stepped structure.

On the basis of the above embodiment, the elastic component 420 can be made of rubber material. It can be understood that rubber has high elasticity, a small elastic module, and exhibits recoverable properties even after being subjected to external forces. In addition, rubber also has a buffering and shock-absorbing effect, which has a certain buffering effect on the propagation of sound and vibration. In this way, the elastic component 420 made of rubber material can twist when the wheel body 200 is impacted, thereby absorbing the impact force received by the wheel body 200 and reducing the vibration of the wheel body 200.

Continuing to refer to FIG. 2, on the basic of the above embodiment, each shock absorption apparatus 400 may further include a first fixing component 440. In a possible implementation, the first fixing component 440 may be a bushing, the shape of the first fixing component 440 may also be a cylindrical structure, and the present application does not limit the shape of the first fixing component 440. In an embodiment of the present application, the first fixing component 440 may have a hollow second cavity 441 inside, so that the first fixing component 440 can be sleeved on the elastic component 420. That is, the elastic component 420 is first inserted into the second cavity 441 of the first fixing component 440, and then the elastic component 420 and the first fixing component 440 are inserted as a whole into the first cavity 411 of the shock absorption housing 410. In a possible implementation, the first fixing component 440, the elastic component 420, and the torsion shaft 430 can be formed as a whole through a vulcanization process, and then pressed into the interior of the shock absorption housing 410 with an interference fit. It can be understood that the vulcanization process can crosslink the elastic component 420 made of rubber material into a spatial network structure, which has good usability.

Referring to FIGS. 2 and 3, on the basic of the above embodiment, in a possible implementation, after the first fixing component 440, the elastic component 420 and the torsion shaft 430 are pressed into the interior of the shock absorber housing 410 with an interference fit, the first fixing component 440 and the elastic component 420 can be set flush with the inner sidewall of the shock absorption housing 410, that is, both the first fixing component 440 and the elastic component 420 are completely located in the first cavity 411 of the shock absorption housing 410, at least a part of the torsion shaft 430 is located in the first cavity 411 of the shock absorption housing 410, and another part of the torsion shaft 430 protrudes outside the shock absorption housing 410, so that the torsion shaft 430 is connected to the front fork structure 300.

Continuing to refer to FIG. 3, on the basic of the above embodiment, one end of each shock absorption housing 410 may have an extension portion 412. The extension portion 412 can be provided with a first groove 413. In this way, one end of the shock absorption apparatus 400 is connected to the wheel body 200 through the first groove 413. In a possible implementation, one end of the shock absorption apparatus 400 can be threaded through the first groove 413 using a bolt, so as to be connected to the wheel body 200. The other end of the shock absorption apparatus 400 can be connected to the front fork structure 300 through the torsion shaft 430.

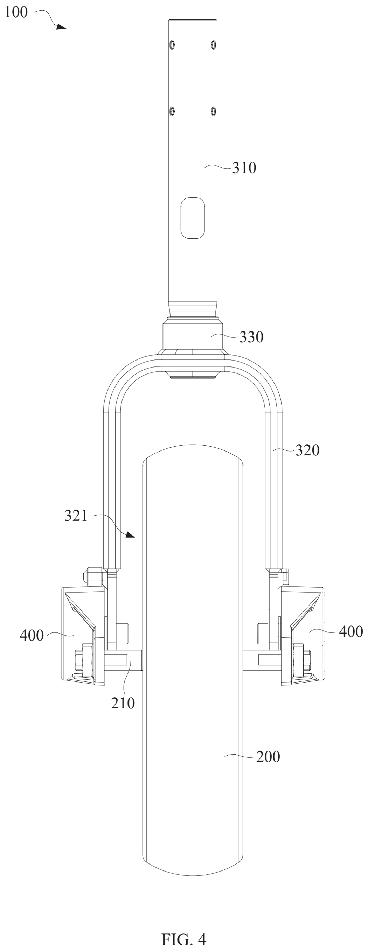

Referring to FIGS. 1 and 4, on the basic of the above embodiment, the vehicle 100 may further include a wheel axle 210. It may be understood that the wheel axle 210 may be threaded through the wheel body 200. In a possible implementation, the wheel axle 210 may be located at the center of the wheel body 200, and the wheel axle 210 may be protruding from two sides of the wheel body 200, so that both ends of the wheel axle 210 are protruding from the wheel body 200. In this way, both ends of the wheel axle 210 can be threaded through the first groove 413 of each shock absorption housing 410, thereby connecting the shock absorption housing 410 to the wheel body 200. In a possible implementation, the wheel axle 210 is threaded through the first groove 413 and fixedly connected by a bolt, thereby fixing the shock absorption housing 410 to the wheel body 200.

Continuing to refer to FIG. 1, on the basic of the above embodiment, the wheel axle 210 is matched with the first groove 413 to prevent relative rotation between the wheel axle 210 and the shock absorption housing 410. In a possible implementation, both ends of the wheel axle 210 protruding from the wheel body 200 can be a rectangular structure. Correspondingly, the first groove 413 provided on the shock absorption housing 410 can also be a rectangular structure, so that the wheel axle 210 matches with the first groove 413, and the wheel axle 210 and the shock absorption housing 410 can be rigidly connected without relative rotation between them. In this way, as the position of the wheel axle 210 and the shock absorption housing 410 being fixed, when the wheel body 200 is impacted, the elastic component 420 inside the shock absorption housing 410 can twist, thereby absorbing the impact force received by the wheel body 200 and achieving shock-absorbing effect.

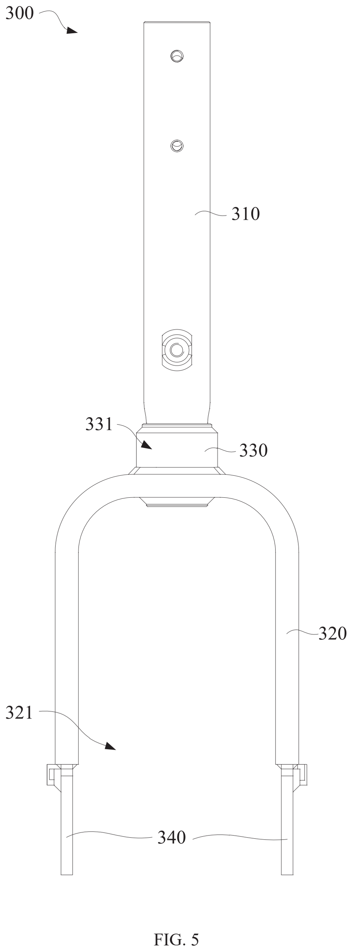

Referring to FIG. 5, on the basic of the above embodiment, the front fork structure 300 may further include a main body portion 310 and a bending portion 320. In a possible implementation, the shape of the main body portion 310 can be a cylindrical structure, and the present application does not limit the shape of the main body portion 310. In an embodiment of the present application, the bending portion 320 may have an opening 321, and a direction of the opening 321 of the bending portion 320 may be set towards the wheel body 200, so that the bending portion 320 can be erected on the wheel body 200. It can be understood that the main body portion 310 can be connected to the bending portion 320 to form a complete front fork structure 300.

Continuing to refer to FIG. 5, on the basic of the above embodiment, the bending portion 320 may have a U-shape, and the bending portion 320 may also have a double-layer structure. In a possible implementation, the bending portion 320 can be a square tube structure. In an embodiment of the present application, the square tube structure is flattened to form a flat-like structure, then bent to form a U-shape, and finally formed into the bending portion 320 by welding or other means. In this way, after flattening the square tube structure, the square tube structure with a hollow cavity is flattened to form the flat bending portion 320 with a double-layer structure. Compared to the front fork structure 300 in related art, the front fork structure 300 provided in the embodiment of the present application enhances the stiffness performance of the structure itself.

Continuing to refer to FIG. 5, on the basic of the above embodiment, the front fork structure 300 may further include a second fixing component 330. The second fixing component 330 can be located between the main body portion 310 and the bending portion 320. In a possible implementation, the second fixing component 330 may be a bushing, the shape of the second fixing component 330 may also be a cylindrical structure, and the present application does not limit the shape of the second fixing component 330. In an embodiment of the present application, the second fixing component 330 may have a hollow third cavity 331 inside, so that one end of the second fixing component 330 can be sleeved on the main body portion 310. That is, the main body portion 310 is inserted into the third cavity 331 of the second fixing component 330. Correspondingly, the other end of the second fixing component 330 can be connected to the bending portion 320, so that the main body portion 310 and the bending portion 320 are fixedly connected through the second fixing component 330.

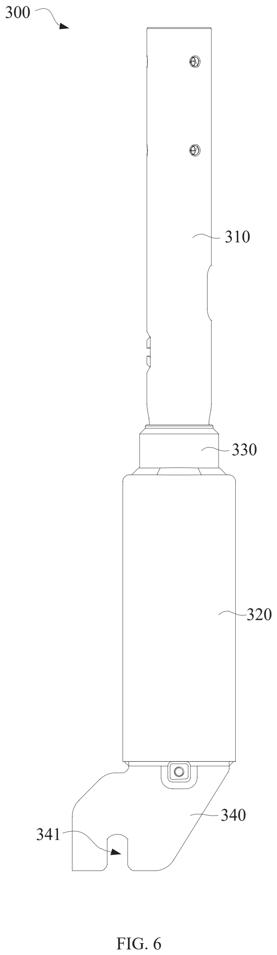

Referring to FIG. 6, on the basic of the above embodiment, the front fork structure 300 further includes a front fork falcula 340. In a possible implementation, the number of the front fork falcula 340 can be at least two, and the present application does not limit the number of the front fork falcula 340. In an embodiment of the present application, the number of the front fork falcula 340 is exemplarily taken as two. The two front fork falculae 340 can be respectively located at two ends of the bending portion 320, and each front fork falcula 340 can be fixedly connected to the bending portion 320.

Continuing to refer to FIG. 6, on the basic of the above embodiment, each front fork falcula 340 can be provided with a second groove 341. The two second grooves 341 can be arranged relative to each other. In a possible implementation, each second groove 341 may correspond to a torsion shaft 430 in each shock absorption apparatus 400. In this way, the torsion shaft 430 in the shock absorption apparatus can be threaded through the second groove 341, so that the front fork falcula 340 can be connected to the torsion shaft 430 through the second groove 341, thereby connecting the shock absorption apparatus 400 to the front fork structure 300.

Continuing to refer to FIG. 1, on the basic of the above embodiment and in conjunction with FIG. 6, the torsion shaft 430 is matched with the second groove 341 to prevent relative rotation between the torsion shaft 430 and the front fork structure 300. In a possible implementation, one end of the torsion shaft 430 protruding from the shock absorption housing 410 can be a rectangular structure. Correspondingly, the second groove 341 provided on the front fork falcula 340 can also be a rectangular structure, so that the torsion shaft 430 matches with the second groove 341, and the torsion shaft 430 and the front fork structure 300 can be rigidly connected without relative rotation between them. In this way, when the wheel body 200 is impacted, it can rotate around the torsion shaft 430. As the position of the torsion shaft 430 and the front fork structure 300 is fixed, and the position of the shock absorption housing 410 and the wheel axle 210 is fixed, at this point, the elastic component 420 inside the shock absorption housing 410 can twist, thereby further absorbing the impact force received by the wheel body 200 and achieving shock-absorbing effect.

Continuing to refer to FIG. 1, on the basic of the above embodiment, in a possible implementation, it can be understood that L1 can be a horizontal line of a bottom surface, L2 can be a centerline of the front fork structure 300, and L3 can be a centerline of the wheel body 200 perpendicular to the bottom surface. Additionally, M can be an intersection point of L1 and L2, while N can be an intersection point of L1 and L3. A distance between points M and N can be a trail distance of the vehicle 100 provided in the present application. It can be understood that when the trail distance of the vehicle 100 is large, the directional performance of the vehicle 100 will also be better. This enables the vehicle 100 to easily maintain straight driving and will not change direction easily due to small obstacles on the road. Therefore, the trail distance of the vehicle 100 provided in the present application can improve the stability of the vehicle 100 during riding.

In an embodiment of the present application, the shock absorption is achieved by setting the elastic component 420, so that the vehicle 100 does not produce noise when in operation. The inherent characteristics of the elastic component 420 make a shock absorption apparatus more linear during operation, and the shock absorption and rebound are also softer, providing a good experience. In addition, the shock absorption apparatus 400 is connected to the front fork structure 30, which provides the vehicle 100 with a larger trail distance and improves riding stability.

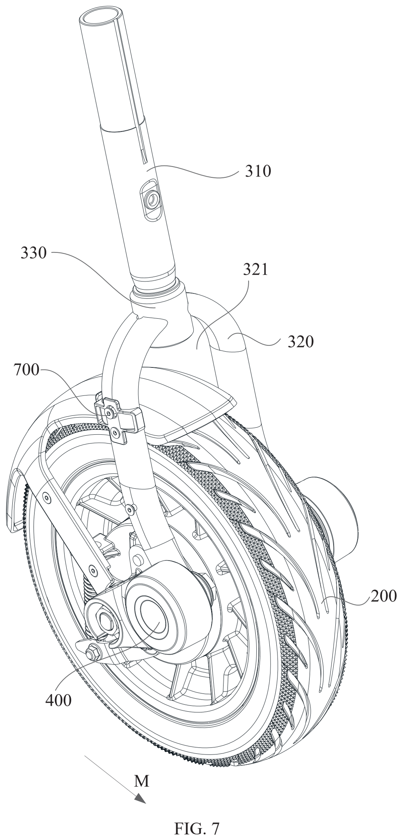

In a possible implementation, referring to FIGS. 7 to 12, the bending portion 320 is arranged at an incline relative to a travelling direction of the vehicle, and an end of the bending portion 320 and the main body portion 310 is located behind an end of the bending portion 320 connected to the shock absorption apparatus 400. The travelling direction of the vehicle is the M direction in FIG. 7.

It should be noted that in this embodiment, the main body portion 310 can be perpendicular to the travelling direction of the vehicle, or tilted relative to the travelling direction of the vehicle, and the tilt direction is the same as that of the bending portion 320.

When the wheel body 200 of the vehicle encounters an obstacle, the impact force can be transmitted along the bending portion 320, which helps to more effectively absorb and disperse the impact force, reducing the impact directly acting on the vehicle main structure, and enhancing the stability and safety of the vehicle. In addition, an end of the bending portion 320 connected to the main body portion 310 is located behind an end of the bending portion 320 connected to the shock absorption apparatus 400, which helps to absorb and alleviate energy through the deformation of the bending portion 320 during impact, further cooperating with the operation of the shock absorption apparatus 400, improving the overall shock absorption effect. This helps to protect the vehicle and its passengers from the impact of severe vibrations and enhance ride comfort.

In this embodiment, the bending portion 320 can be made of an oblateness circular tube, and there are two bending portions 320. The two bending portions 320 are connected to the main body portion 310 through a second fixing component 330, and the two bending portions 320 enclose to form an opening 321 for accommodating the wheel body 200. The two bending portions 320 are symmetrically arranged relative to the main body portion 310. The design of the oblateness circular tube enables the bending portion 320 to undergo the controllable deformation when subjected to the impact force, thereby absorbing and dispersing energy. In addition, the two bending portions are symmetrically arranged, which can jointly bear the impact force, further improving the efficiency of the energy absorption.

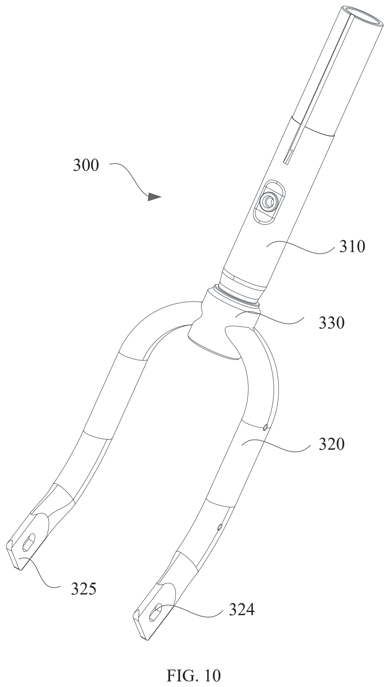

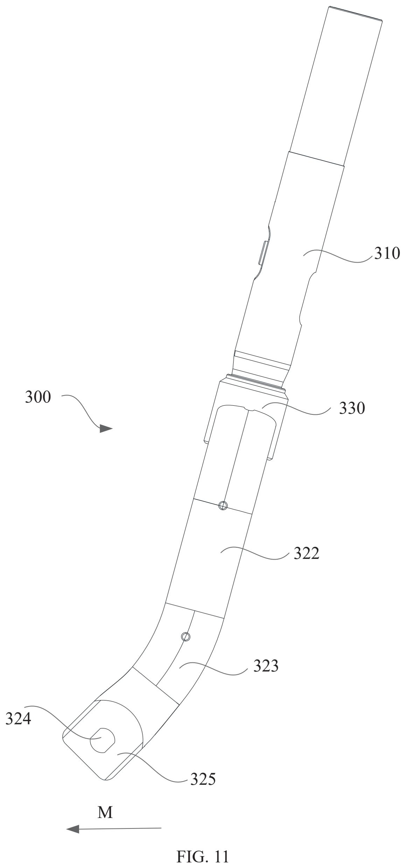

Referring to FIGS. 10 and 11, in a possible implementation, the bending portion 320 includes a first bending portion 322 and a second bending portion 323. The first bending portion 322 is connected to the main body portion 310. In other words, the first bending portion 322 is connected to the second fixing component 330.

The second bending portion 323 is connected to the first bending portion 322, and an end of the second bending portion 323 that departs from the first bending portion 322 extends in a direction away from the wheel axle of the wheel body 200. This helps optimize the spatial layout of the components. By reasonably adjusting the length and angle of the first bending portion 322 and the second bending portion 323, the limited space resources can be effectively utilized, avoiding interference or conflict with other components, thereby improving the compactness and integration of the entire vehicle.

In order to facilitate the connection between the bending section 320 and the torsion shaft 430, a fixing hole 324 is provided on the second bending portion 323, the torsion shaft 430 is threaded through the fixing hole 324 and connected to the second bending portion 323 through a nut.

In this embodiment, the bending portion 320 includes a flat portion 325, and a thickness of the flat portion 325 is smaller than a thickness of remaining portions of the second bending portion 323. In other words, the part of the area where the second bending portion 323 deviates from the first bending portion 322 can be molded to form the flat portion 325.

The fixing hole 324 is set in the flat portion 325. When installing the torsion shaft 430 into the fixing hole 324, the contact area between the flat portion 325 and the shock absorption housing 410 or the elastic component 420 increases, thereby improving the connection strength between the shock absorption apparatus 400 and the bending portion 320.

It should be noted that the connection between the front fork structure 300 and the wheel body 200 is mainly in accordance with the connection of the shock absorption housing 410 of the shock absorption apparatus 400, so as to further improve the stability of the connection between the front fork structure 300 and the wheel body 200.

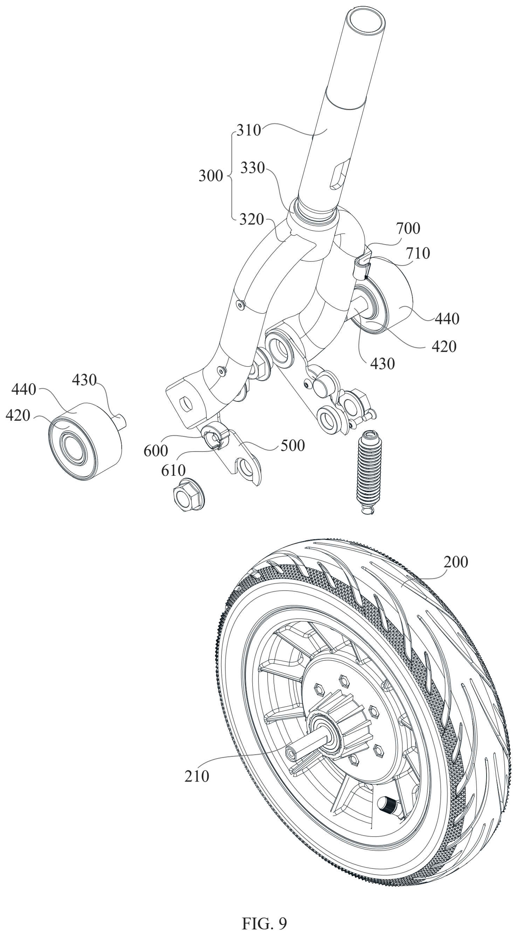

Referring to FIG. 9, the vehicle provided in this embodiment further includes a connector 500, where one end of the connector 500 is sleeved on the torsion shaft 430, and the other end of the connector 500 is sleeved on the wheel axle 210. In this way, the connector 500 can reduce the twisting of the wheel body 200 during rotation, thereby improving the overall rigidity of the vehicle, enabling the wheel body 200 to maintain a more stable posture during driving, reducing vibration and noise caused by twisting, and enhancing driving comfort and stability.

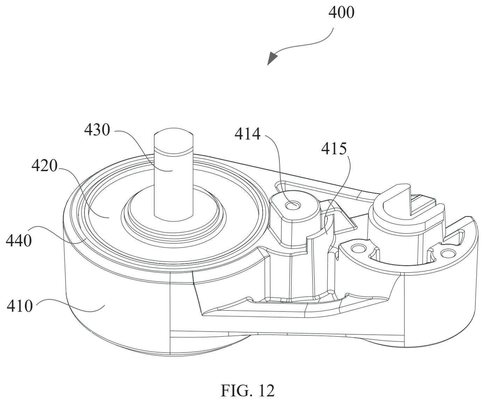

Referring to FIG. 12, in a possible implementation, the shock absorption housing 410 is further provided with a connection protrusion 414, and the connection protrusion 414 is rotatably connected to the connector 500 through a connection shaft. Or, in other words, the connection protrusion 414 has a connecting hole, and the connection shaft is set on the connector 500, and the connection shaft passing through the connecting hole, so that the shock absorption housing 410 can be rotatably connected relative to the connector 500. In this way, during the driving process of the vehicle, especially on the uneven road, the wheel body 200 will encounter various obstacles and bumps, which will cause the wheel axle 210 to be subjected to forces and torques in different directions. By allowing the shock absorption housing 410 to twist relative to the wheel axle 210, this design can better absorb and disperse these forces and torques, thereby reducing the bump of the vehicle.

Referring to FIG. 9, furthermore, the vehicle also includes an annular guiding component 600, the annular guiding component is connected to the connector 500 and sleeved over the connection protrusion 414. The annular guiding component 600 is provided with a guiding groove 610. The shock absorption housing 410 also includes a guiding protrusion 415, and the guiding protrusion 415 is sliding on the guiding groove 610. In this way, not only can the shock absorption apparatus 400 be guided by the guiding groove 610, but also limited by the guiding groove 610.

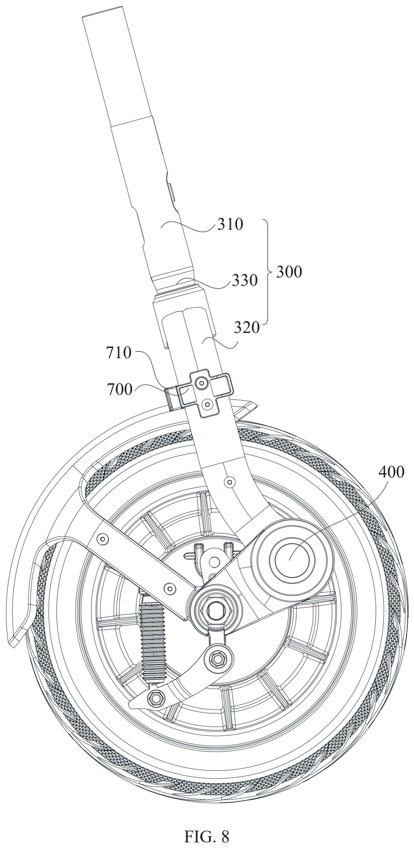

Referring to FIG. 8, in a possible implementation, the vehicle further includes a wiring harness fixing component 700; and the wiring harness fixing component 700 is set on the front fork structure 300. The wiring harness fixing component 700 provides a fixing point for wires, cables, and other harnesses in the vehicle. By neatly fixing these harnesses to the wiring harness fixing component, it can avoid the harnesses from swinging or entangling inside the vehicle, thereby improving the efficiency and cleanliness of the harness management.

The wiring harness fixing component 700 surrounds at least part of an outer peripheral surface of the bending portion 320 of the front fork structure; the wiring harness fixing component 700 is provided with a U-shaped fixing groove 710. The U-shaped fixing groove 710 facilitates the fixation of the harness, thereby improving the stability of the harness.

Each embodiment or implementation method in this specification is described in a progressive manner, and each embodiment focuses on the differences from other embodiments, the same and similar parts between each embodiment can be referred to each other.

It should be noted that the phrases "in specific implementation", "in some embodiments", "in this embodiment", "exemplarily" mentioned in the specification indicate that the described embodiments may include a specific feature, structure, or characteristic, but not necessarily every embodiment includes that specific feature, structure, or characteristic. Furthermore, such phrases may not necessarily refer to the same embodiment. Furthermore, when describing the specific feature, structure, or characteristic in conjunction with an embodiment, it is within the knowledge of person skilled in the art to implement such feature, structure, or characteristic in conjunction with other embodiments that are explicitly or implicitly described.

Generally speaking, the term should be understood at least partially by its usage in context. For example, at least partially depending on the context, the term "one or more" used in the text can be used to describe any feature, structure, or characteristic that can be used to describe singular meaning, or a combination of features, structures, or characteristics that can be used to describe plural meaning. Similarly, at least partially depending on the context, the terms such as "one" or "the" can also be understood as conveying singular or plural usage.

It should be easily understood that the terms "on...", "above...", and "over..." in the present disclosure should be interpreted in a widest possible way, so that "on..." not only means "directly on something", but also includes the meaning of "on something" with intermediate features or layers in between, and "above..." or "over..." not only includes the meaning of "on something" or "over", but also includes the meaning of "on something" or "over" without intermediate features or layers in between (i.e., directly on something).

In addition, for the convenience of explanation, spatial relative terms such as "below", "following", "under", "above", "over", etc. can be used in the text to describe the relationship of one element or feature relative to other elements or features as shown in the figures. The spatial relative term is intended to encompass different orientations of means in use or operation, in addition to the orientations shown in the accompanying drawings. The device can have other orientations (rotated 90 degrees or in other orientations), and the spatial relative descriptive words used in the text can also be interpreted accordingly.

Finally, it should be noted that the above various embodiments are only used to illustrate the technical solutions of the present application, but not to limit them; although the present application has been described in detail with reference to the foregoing embodiments, person with ordinary skill in the art should understand that: it is still possible to make modifications to the technical solutions described in the foregoing embodiments or to make equivalent replacements for some or all of the technical features therein; and these modifications or replacements do not take the essence of the corresponding technical solutions out of the scope of the technical solutions of the embodiments of the present application.

## Claims

1. A vehicle, comprising:
a wheel body;
a front fork structure, wherein the front fork structure is erected on the wheel body;
two shock absorption apparatuses, wherein the two shock absorption apparatuses are respectively located on two sides of the front fork structure, one end of each shock absorption apparatus is connected to the front fork structure, and the other end of each shock absorption apparatus is connected to the wheel body.

2. The vehicle according to claim 1, wherein each shock absorption apparatus comprises a shock absorption housing, an elastic component, and a torsion shaft;
the shock absorption housing is sleeved on the elastic component;
one end of the torsion shaft is inserted into the elastic component, and the other end of the torsion shaft is connected to the front fork structure.

3. The vehicle according to claim 2, wherein the elastic component is made of rubber material, and the elastic component is used to reduce vibration of the wheel body.

4. The vehicle according to claim 3, wherein each shock absorption apparatus further comprises: a first fixing component;
the first fixing component is sleeved on the elastic component, the first fixing component, the elastic component, and the torsion shaft are inserted as a whole into the shock absorption housing;
the first fixing component and the elastic component are arranged flush with a side of the shock absorption housing facing the front fork structure after being inserted into the shock absorption housing.

5. The vehicle according to claim 4, wherein one end of each shock absorption housing is provided with a first groove;
one end of the shock absorption apparatus is connected to the wheel body through the first groove, and the other end of the shock absorption apparatus is connected to the front fork structure through the torsion shaft.

6. The vehicle according to claim 5, further comprising: a wheel axle, wherein the wheel axle is protruding from two sides of the wheel body;
the wheel axle is threaded through the first groove to connect the shock absorption housing with the wheel body;
the wheel axle is matched with the first groove to prevent relative rotation between the wheel axle and the shock absorption housing.

7. The vehicle according to claim 6, wherein the front fork structure comprises a main body portion and a bending portion, wherein the main body portion is connected to the bending portion;
the bending portion has an opening, and a direction of the opening is set towards the wheel body, so that the bending portion is erected on the wheel body;
the bending portion is a flat U-shaped structure, and the bending portion has a double-layer structure.

8. The vehicle according to claim 7, wherein the front fork structure further comprises: a second fixing component;
the second fixing component is located between the main body portion and the bending portion;
one end of the second fixing component is sleeved on the main body portion, and the other end of the second fixing component is connected to the bending portion.

9. The vehicle according to claim 8, wherein the front fork structure further comprises: two front fork falculae;
the two front fork falculae are respectively located at two ends of the bending portion, and each front fork falcula is connected to the bending portion.

10. The vehicle according to claim 9, wherein each front fork falcula is provided with a second groove, and each second groove corresponds to the torsion shaft in each shock absorption apparatus;
the torsion shaft is threaded through the second groove to connect the shock absorption apparatus with the front fork structure;
the torsion shaft is matched with the second groove to prevent relative rotation between the torsion shaft and the front fork structure.

11. The vehicle according to claim 7, wherein the bending portion is arranged at an incline relative to a travelling direction of the vehicle, and an end of the bending portion and the main body portion is located behind an end of the bending portion connected to the shock absorption apparatus.

12. The vehicle according to claim 11, wherein the bending portion comprises a first bending portion and a second bending portion; and the first bending portion is connected to the main body portion;
the second bending portion is connected to the first bending portion, and an end of the second bending portion that departs from the first bending portion extends in a direction away from the wheel axle of the wheel body.

13. The vehicle according to claim 12, wherein the second bending portion is provided with a fixing hole, and the torsion shaft is threaded through the fixing hole.

14. The vehicle according to claim 13, wherein the bending portion comprises a flat portion, and a thickness of the flat portion is smaller than a thickness of remaining portions of the second bending portion;
the fixing hole is set in the flat portion.

15. The vehicle according to any one of claims 7-14, further comprising: a connector, wherein one end of the connector is sleeved on the torsion shaft, and the other end of the connector is sleeved on the wheel axle.

16. The vehicle according to claim 15, wherein the shock absorption housing is further provided with a connection protrusion, and the connection protrusion is rotatably connected to the connector through a connection shaft.

17. The vehicle according to claim 16, further comprising: an annular guiding component, and the annular guiding component is connected to the connector and sleeved on the connection protrusion;
wherein the annular guiding component is provided with a guiding groove, the shock absorption housing further comprises a guiding protrusion, and the guiding protrusion is sliding on the guiding groove.

18. The vehicle according to any one of claims 1-14, further comprising: a wiring harness fixing component;
the wiring harness fixing component is set on the front fork structure.

19. The vehicle according to claim 18, wherein the wiring harness fixing component surrounds at least part of an outer peripheral surface of the bending portion of the front fork structure;
the wiring harness fixing component is provided with a U-shaped fixing groove.
